# EUROPÄISCHE PATENTSCHRIFT

(11) **EP 3 316 432 B1**
(45) Veröffentlichungstag und Bekanntmachung des Hinweises auf die Patenterteilung: **29.07.2020**
(21) Anmeldenummer: 17198307.5
(22) Anmeldetag: 25.10.2017
(51) Int. Cl.: H02J 1/00, H02J 7/14, B60R 16/03, B60L 50/50, B60L 50/15

(54) **STROMVERSORGUNGSANORDNUNG MIT EINER SCHNITTSTELLE ZUM BETREIBEN EINES MEHRSPANNUNGSSYSTEMS**
POWER SUPPLY DEVICE WITH AN INTERFACE FOR OPERATING A MULTI-VOLTAGE SYSTEM
DISPOSITIF D'ALIMENTATION ÉLECTRIQUE POURVU D'UNE INTERFACE PERMETTANT DE FAIRE FONCTIONNER UN SYSTÈME MULTITENSION

(30) Priorität: 28.10.2016 DE 102016221329
(43) Veröffentlichungstag der Anmeldung: 02.05.2018
(73) Patentinhaber: Deere & Company, Moline, IL 61265 (US)
(72) Erfinder: Botev, Decho, 68163 Mannheim (DE); Turner, Christopher D, 68163 Mannheim (DE)
(74) Vertreter: Dehnhardt, Florian Christopher

(56) Entgegenhaltungen:
- DE-A1- 10 231 517
- DE-A1- 10 344 563
- DE-A1-102005 051 433
- DE-A1-102012 009 738
- DE-T5-112012 007 029

## Beschreibung

Die Erfindung betrifft eine Stromversorgungsanordnung zum Betreiben eines Mehrspannungssystems eines landwirtschaftlichen Fahrzeugs, insbesondere eines landwirtschaftlichen Traktors.

Die aus dem Fahrzeugbereich bekannten Stromversorgungsanordnungen umfassen typischerweise neben einem Motorgenerator, der sich wahlweise als elektrischer Hilfsantrieb oder aber als Stromgenerator betreiben lässt, einen aufladbaren Energiespeicher zur Zwischenspeicherung der mittels des Motorgenerators erzeugten elektrischen Energie. Bei dem aufladbaren Energiespeicher handelt es sich üblicherweise um einen Lithiumionen- oder Bleiakkumulator. Letzterer ist vergleichsweise kostengünstig und robust, sodass sich eine Verwendung im landwirtschaftlichen Fahrzeugbereich anbietet. Problematisch ist jedoch der Umstand, dass die zum Laden des Bleiakkumulators erforderliche Ladespannung höher ist als dessen Nennspannung. Dies kann zur Beschädigung von daran angeschlossenen elektrischen Fahrzeugkomponenten, wie elektronischen Steuergeräten, elektrischen Hilfsgeneratoren und dergleichen, führen, insbesondere dann, wenn diese an die im Automobilbereich übliche Verwendung von Lithiumionenakkumulatoren angepasst sind, da hier erhöhte Ladespannungen in vergleichbarem Maße nicht auftreten.

Die fortschreitende Elektrifizierung im landwirtschaftlichen Fahrzeugbereich führt zudem zu je nach Einsatzzweck unterschiedlichen Anforderungen an die Stromversorgung, was sich insbesondere in der parallelen Verwendung unterschiedlicher Spannungsniveaus niederschlägt. So ist es beispielsweise wünschenswert, mit ein und demselben Motorgenerator nicht nur elektrische Fahrzeugkomponenten an einem Bordnetz des landwirtschaftlichen Fahrzeugs mit elektrischer Energie zu versorgen, sondern auch solche elektrische Lasten, die aufgrund ihrer Leistungsanforderungen ein gegenüber dem Bordnetz höheres Spannungsniveau benötigen. Eine derartige elektrische Last kann beispielsweise von einem landwirtschaftlichen Anbaugerät umfasst sein und dort der Durchführung diverser Bodenbearbeitungsfunktionen oder dem Betrieb eines elektrischen Radantriebs dienen.

Das Dokument DE 10 2005 051 433 A1 offenbart ein Verfahren zur Regelung eines Generators in einem Zweispannungsbordnetz eines Kraftfahrzeuges, bei welchem zwei Schaltungsseiten unterschiedlicher Spannungshöhe über eine Kopplungseinrichtung gekoppelt sind und welche einen Längsregler sowie einen Gleichspannungswandler aufweist.

Ein Zweispannungsbordnetz ist des Weiteren aus dem Dokument DE 11 2012 007 029 T5 als bekannt zu entnehmen.

Aufgabe der vorliegenden Erfindung ist es daher, eine Stromversorgungsanordnung mit einer Schnittstelle zum Betreiben eines Mehrspannungssystems eines landwirtschaftlichen Fahrzeugs anzugeben, das die vorgenannten Zielkonflikte löst.

Diese Aufgabe wird durch eine Stromversorgungsanordnung mit den Merkmalen des Patentanspruchs 1 gelöst.

Die Stromversorgungsanordnung zum Betreiben eines Mehrspannungssystems eines landwirtschaftlichen Fahrzeugs umfasst einen ersten Netzwerkabschnitt mit einem daran angeschlossenen Motorgenerator und einen zweiten Netzwerkabschnitt mit einem daran angeschlossenen Bleiakkumulator, wobei der erste Netzwerkabschnitt ein der Nennspannung des Bleiakkumulators entsprechendes erstes Spannungsniveau zum Betreiben elektrischer Fahrzeugkomponenten und der zweite Netzwerkabschnitt ein davon abweichendes, demgegenüber erhöhtes zweites Spannungsniveau zum Laden des Bleiakkumulators sowie zur Versorgung einer von einem landwirtschaftlichen Anbaugerät umfassten elektrischen Last mit elektrischer Energie aufweist, wobei eine Schnittstelle vorgesehen ist, die eine die beiden Netzwerkabschnitte verbindende Spannungsquelle bildet, die in einem Ladebetriebsmodus eine sich aus den beiden Spannungsniveaus ergebende Ausgleichsspannung bereitstellt und die in einem Motorbetriebsmodus überbrückt ist. Weitere Merkmale der beanspruchten Anordnung sind im Anspruch 1 angegeben.

Genauer gesagt wird im Ladebetriebsmodus, der sich dadurch auszeichnet, dass der Motorgenerator zur Erzeugung elektrischer Energie herangezogen wird, das erste Spannungsniveau mittels der Spannungsquelle auf das zum Laden des Bleiakkumulators bzw. zum Betreiben der elektrischen Last des landwirtschaftlichen Anbaugeräts geeignete zweite Spannungsniveau angehoben.

Im Motorbetriebsmodus hingegen wird der Motorgenerator zur Erzeugung eines entsprechenden Antriebsmoments mit der seitens des Bleiakkumulators zur Verfügung stehenden elektrischen Energie beaufschlagt, wobei der Betrieb der elektrischen Last während dieses Zeitraums unterbrochen wird. Insofern erfolgt eine Priorisierung des Motorbetriebs gegenüber einer Versorgung der elektrischen Last des landwirtschaftlichen Anbaugeräts mit elektrischer Energie. Aufgrund der Überbrückung der Spannungsquelle weisen der erste und zweite Netzwerkabschnitt dann dasselbe Spannungsniveau, nämlich das erste Spannungsniveau auf.

Bei dem landwirtschaftlichen Fahrzeug handelt es sich insbesondere um einen landwirtschaftlichen Traktor, in dessen Front- bzw. Heckbereich sich entsprechende Steckverbinder zur Energieversorgung bzw. Steuerung des landwirtschaftlichen Anbaugeräts bzw. der von diesem umfassten elektrischen Last befinden.

Vorteilhafte Weiterbildungen der erfindungsgemäßen Stromversorgungsanordnung gehen aus den Unteransprüchen hervor.

Vorzugsweise beträgt das erste Spannungsniveau 48 Volt und das zweite Spannungsniveau 56 Volt, woraus sich eine von der Spannungsquelle bereitzustellende Ausgleichsspannung von 8 Volt ergibt. Das erste Spannungsniveau ist somit angepasst an die Verwendung von Standardkomponenten aus dem Automobil- oder Nutzfahrzeugbereich insbesondere nach dem LV148/VDA320-Standard, wohingegen das zweite Spannungsniveau der erforderlichen Ladespannung für Bleiakkumulatoren mit einer Nennspannung von 48 Volt entspricht sowie den erhöhten Leistungsanforderungen elektrisch betriebener landwirtschaftlicher Anbaugeräte gerecht wird.

Hierbei besteht die Möglichkeit, dass der Motorgenerator als Startergenerator zum Anlassen eines mit diesem antriebsverbundenen Verbrennungsmotors ausgebildet ist. Gerade bei leistungsstarken Dieselmotoren mit großem Hubraum ermöglicht die Verwendung eines 48 Volt Bordnetzes die Bereitstellung entsprechend hoher Anlass- bzw. Kurbelmomente.

Des Weiteren kann es sich bei der Spannungsquelle um einen aus einer Fremdspannungsquelle gespeisten potentialfreien Spannungskonverter handeln. Für die Bemessung der bereitzustellenden Leistung ist hier neben dem zu erwartenden Maximalstrom die (gegenüber dem ersten bzw. zweiten Spannungsniveau vergleichsweise niedrige) Ausgleichsspannung anzusetzen. Die Leistungsanforderungen an die Spannungsquelle sind dementsprechend gering, sodass sich diese kostengünstig realisieren lässt. Bei dem Spannungskonverter handelt es sich um eine gängige und damit erprobte Komponente, die neben einem eingangs- und einem ausgangsseitigen Wechselrichter einen zwischengeschalteten Umspanntransformator aufweist. Als Fremdspannungsquelle kann der Bleiakkumulator oder aber ein von diesem umfasster Mittenabgriff dienen, an dem dann eine gegenüber der Nennspannung des Bleiakkumulators niedrigere Versorgungsspannung zum Betreiben des Spannungskonverters zur Verfügung steht.

Alternativ kann es sich bei der Spannungsquelle um einen mit dem ersten und zweiten Netzwerkabschnitt in Serie geschalteten Aufwärtsregler handeln. Dieser zeichnet sich durch einen gegenüber dem potentialfreien Spannungskonverter einfacheren Aufbau aus. Prinzipbedingt ist jedoch hier für die Bemessung der bereitzustellenden Leistung neben dem zu erwartenden Maximalstrom das zweite Spannungsniveau in voller Höhe anzusetzen.

Im einfachsten Fall erfolgt die Überbrückung der Spannungsquelle mittels eines elektromagnetischen Relais oder eines Halbleiterschalters. Bei dem Halbleiterschalter handelt es sich üblicherweise um einen Leistungs-MOSFET.

Ferner ist es denkbar, dass in einem dem Motorbetriebsmodus vorgeschalteten Vorladebetriebsmodus die Spannungsquelle für eine vorgegebene Vorladezeit mittels eines Strombegrenzungselements überbrückt ist, um einen induktiv bedingten Einschaltstromstoß bei Inbetriebnahme des Motorgenerators zu begrenzen sowie eine damit einhergehende Beschädigung der am ersten Netzwerkabschnitt angeschlossenen elektrischen Fahrzeugkomponenten zu verhindern.

Zusätzlich kann der Bleiakkumulator einen mit dem ersten Netzwerkabschnitt verbundenen Mittenabgriff aufweisen, sodass sich der erste Netzwerkabschnitt auf einem gegenüber der Nennspannung des Bleiakkumulators niedrigeren ersten Spannungsniveau betreiben lässt. Der Mittenabgriff befindet sich zwischen den einzelnen Zellen des Bleiakkumulators, von denen jede eine Nennspannung von 6 Volt aufweist. Für den Fall eines Bleiakkumulators mit einer Nennspannung von 48 Volt kann die Spannung des Mittenabgriffs beispielsweise 42 Volt betragen und zwischen der ersten und den übrigen sieben der in Serie geschalteten Zellen abgegriffen werden.

Darüber hinaus ist ein Wechselschalter zur Umschaltung zwischen dem Ladebetriebsmodus und dem Motorbetriebsmodus derart vorgesehen, wobei der zweite Netzwerkabschnitt im Ladebetriebsmodus mit der Spannungsquelle und im Motorbetriebsmodus mit dem ersten Netzwerkabschnitt verbunden ist. Der zweite Netzwerkabschnitt ist dann vollständig von der Spannungsquelle getrennt, sodass diese angeschaltet bleiben kann. Der Wechselschalter kann hierbei in Gestalt eines elektromagnetischen Relais baulich in die Spannungsquelle integriert sein.

Verfügt der Bleiakkumulator über einen Mittenabgriff, so kann in Abwandlung der vorstehend genannten Ausgestaltung ein Doppelwechselschalter zur Umschaltung zwischen dem Ladebetriebsmodus und dem Motorbetriebsmodus derart vorgesehen sein, dass im Ladebetriebsmodus der erste Netzwerkabschnitt mit dem Motorgenerator und der zweite Netzwerkabschnitt mit der Spannungsquelle verbunden ist, und dass im Motorbetriebsmodus der zweite Netzwerkabschnitt anstelle des ersten Netzwerkabschnitts mit dem Motorgenerator verbunden ist. Während des Ladebetriebsmodus lädt die Spannungsquelle somit die erste Zelle des Bleiakkumulators oberhalb des Mittenabgriffs, der Motorgenerator hingegen die übrigen sieben Zellen. Im Ladebetriebsmodus kann auch hier die Spannungsquelle angeschaltet bleiben.

Die erfindungsgemäße Stromversorgungsanordnung wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: eine beispielhafte, vorliegend nicht beanspruchte Stromversorgungsanordnung mit einer als potentialfreier Spannungskonverter ausgebildeten Spannungsquelle, die sich in einem Ladebetriebsmodus befindet,
- Fig. 2: die Stromversorgungsanordnung gemäß Fig. 1, wobei sich die Spannungsquelle in einem Motorbetriebsmodus befindet,
- Fig. 3: eine weitere beispielhafte und nicht beanspruchte Stromversorgungsanordnung mit einer als Aufwärtsregler ausgebildeten Spannungsquelle, die sich in einem Ladebetriebsmodus befindet,
- Fig. 4: die Stromversorgungsanordnung gemäß Fig. 3, wobei sich die Spannungsquelle in einem Motorbetriebsmodus befindet,
- Fig. 5: gemäß einer Ausführungsform der Erfindung: eine alternative Ausgestaltung eines Schaltelements zur Überbrückung der Spannungsquelle im Ladebetriebsmodus gemäß Fig. 2 und 4,
- Fig. 6: gemäß einer Ausführungsform der Erfindung: eine Abwandlung der Stromversorgungsanordnung gemäß Fig. 5 mit einem an einem Bleiakkumulator vorgesehenen Mittenabgriff.

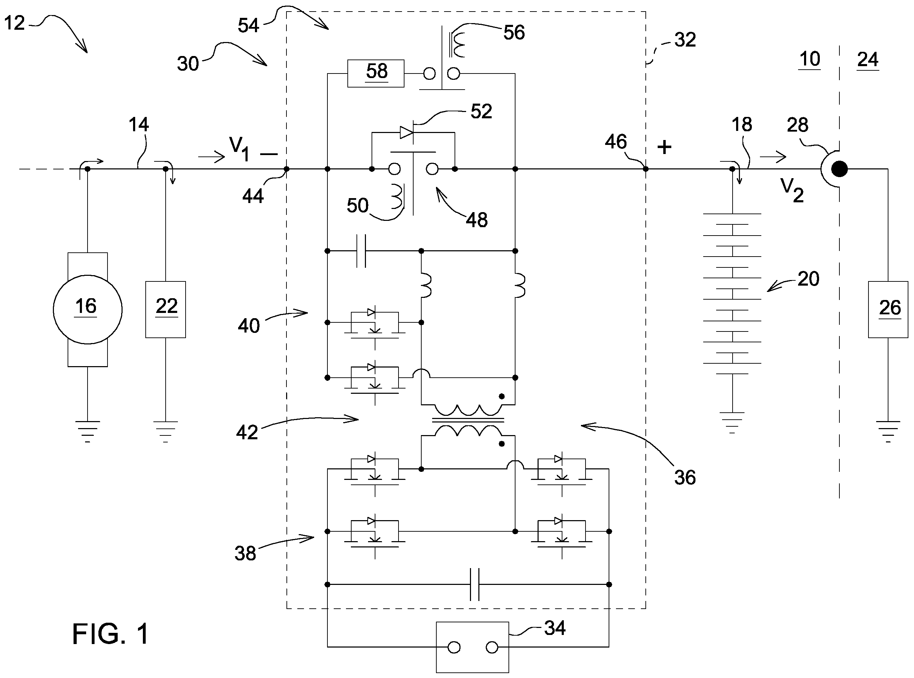

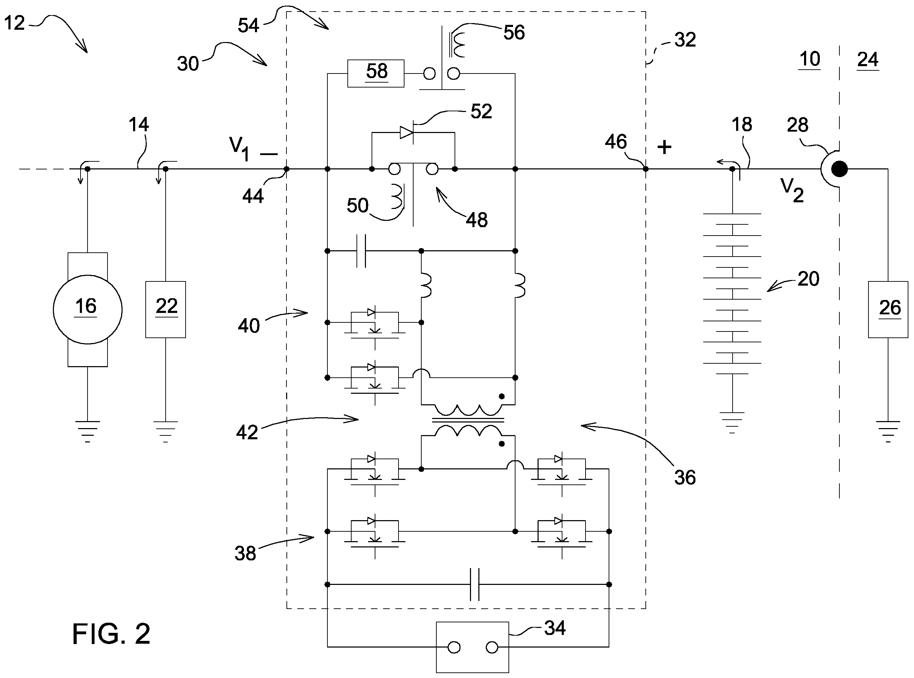

- Fig. 1 und 2: zeigen eine Stromversorgungsanordnung mit einer Schnittstelle zum Betreiben eines Mehrspannungssystems in jeweils unterschiedlichen Betriebsmodi.

Die in einem landwirtschaftlichen Fahrzeug 10 untergebrachte Stromversorgungsanordnung 12 umfasst einen ersten Netzwerkabschnitt 14 mit einem daran angeschlossenen Motorgenerator 16 und einen zweiten Netzwerkabschnitt 18 mit einem daran angeschlossenen Bleiakkumulator 20. Der erste Netzwerkabschnitt 14 weist ein der Nennspannung des Bleiakkumulators entsprechendes erstes Spannungsniveau V₁ zum Betreiben einer Vielzahl von elektrischen Fahrzeugkomponenten 22 auf. Bei den elektrischen Fahrzeugkomponenten 22 handelt es sich beispielsweise um elektronische Steuergeräte, elektrisch angetriebene Hilfsaggregate und dergleichen. Der zweite Netzwerkabschnitt 18 weist ein demgegenüber erhöhtes zweites Spannungsniveau V₂ zum Laden des Bleiakkumulators 20 sowie zur Versorgung einer von einem landwirtschaftlichen Anbaugerät 24 umfassten elektrischen Last 26 mit elektrischer Energie auf. Letztere dient der Durchführung diverser Bodenbearbeitungsfunktionen oder dem Betrieb eines elektrischen Radantriebs.

Bei dem landwirtschaftlichen Fahrzeug 10 handelt es sich beispielhaft um einen landwirtschaftlichen Traktor, in dessen Front- bzw. Heckbereich sich entsprechende Steckverbinder 28 zur Energieversorgung bzw. Steuerung des landwirtschaftlichen Anbaugeräts 24 bzw. der von diesem umfassten elektrischen Last 26 befinden.

Die Schnittstelle 30 zum Betreiben des Mehrspannungssystems bildet eine die beiden Netzwerkabschnitte 14, 18 verbindende Spannungsquelle 32. Bei der Spannungsquelle 32 handelt es sich im vorliegenden Fall um einen aus einer Fremdspannungsquelle 34 gespeisten potentialfreien Spannungskonverter 36. Der Spannungskonverter 36 umfasst neben einem in Fig. 1 schematisch angedeuteten eingangs- und ausgangsseitigen Wechselrichter 38, 40 einen zwischengeschalteten Umspanntransformator 42. Als Fremdspannungsquelle 34 dient der Bleiakkumulator 20.

In einem in Fig. 1 dargestellten Ladebetriebsmodus stellt die durch den Spannungskonverter 36 gebildete Spannungsquelle 32 an ihren Ausgangsklemmen 44, 46 eine sich aus den beiden Spannungsniveaus V₁, V₂ ergebende Ausgleichsspannung zur Verfügung, wohingegen die Spannungsquelle 32 in einem in Fig. 2 dargestellten Motorbetriebsmodus durch Schließen eines zugehörigen Schaltelements 48 in Gestalt eines elektromagnetischen Relais 50 überbrückt ist.

Genauer gesagt wird im Ladebetriebsmodus, der sich dadurch auszeichnet, dass der Motorgenerator 16 zur Erzeugung elektrischer Energie herangezogen wird, das erste Spannungsniveau V₁ mittels der Spannungsquelle 32 auf das zum Laden des Bleiakkumulators 20 bzw. zum Betreiben der elektrischen Last 26 des landwirtschaftlichen Anbaugeräts geeignete zweite Spannungsniveau V₂ angehoben.

Im Motorbetriebsmodus hingegen wird der Motorgenerator 16 zur Erzeugung eines entsprechenden Antriebsmoments mit der seitens des Bleiakkumulators 20 zur Verfügung stehenden elektrischen Energie beaufschlagt, wobei der Betrieb der elektrischen Last 26 während dieses Zeitraums unterbrochen wird. Insofern erfolgt eine Priorisierung des Motorbetriebs gegenüber einer Versorgung der elektrischen Last 26 des landwirtschaftlichen Anbaugeräts 24 mit elektrischer Energie. Aufgrund der Überbrückung der Spannungsquelle 32 weisen der erste und zweite Netzwerkabschnitt 14, 18 dann dasselbe Spannungsniveau, nämlich das erste Spannungsniveau V₁ auf. Da hierzu im vorliegenden Fall die beiden Ausgangsklemmen 44, 46 der Spanungsquelle 32 mittels des Schaltelements 48 kurzgeschlossen werden, wird diese während des Motorbetriebsmodus abgeschaltet.

Der sich in den beiden Betriebsmodi jeweils einstellende Stromfluss ist in Fig. 1 und 2 mit Pfeilen angedeutet.

Beispielsgemäß beträgt das erste Spannungsniveau V₁ = 48 Volt und das zweite Spannungsniveau V₂ = 56 Volt, woraus sich eine von der Spannungsquelle 32 bereitzustellende Ausgleichsspannung von 8 Volt ergibt. Das erste Spannungsniveau V₁ ist somit angepasst an die Verwendung von Standardkomponenten aus dem Automobil- oder Nutzfahrzeugbereich insbesondere nach dem LV148/VDA320-Standard, wohingegen das zweite Spannungsniveau V₂ der erforderlichen Ladespannung für Bleiakkumulatoren mit einer Nennspannung von 48 Volt entspricht sowie den erhöhten Leistungsanforderungen elektrisch betriebener landwirtschaftlicher Anbaugeräte gerecht wird.

Vorliegend ist der Motorgenerator 16 als Startergenerator zum Anlassen eines mit diesem antriebsverbundenen Verbrennungsmotors ausgebildet. Gerade bei leistungsstarken Dieselmotoren mit großem Hubraum ermöglicht die Verwendung eines 48 Volt Bordnetzes die Bereitstellung entsprechend hoher Anlass- bzw. Kurbelmomente.

Zusammenfassend bildet die Schnittstelle 30 somit eine die beiden Netzwerkabschnitte 14, 18 verbindende Spannungsquelle 32, die in einem Ladebetriebsmodus eine sich aus den beiden Spannungsniveaus V₁, V₂ ergebende Ausgleichsspannung bereitstellt und die in einem Motorbetriebsmodus überbrückt ist.

Gemäß Fig. 2 erfolgt die Überbrückung der Spannungsquelle 32 durch Schließen des elektromagnetischen Relais 50, wobei diesem eine Schutzdiode 52 parallel geschaltet ist. Abweichend davon kann das elektromagnetischen Relais 50 jedoch auch durch einen Halbleiterschalter ersetzt sein. Der Halbleiterschalter kann Bestandteil des ausgangsseitigen Wechselrichters 40 der Spannungsquelle sein, es kann sich jedoch auch um eine separate Komponente handeln. Bei dem Halbleiterschalter handelt es sich üblicherweise um einen Leistungs-MOSFET.

Zusätzlich ist in einem dem Motorbetriebsmodus vorgeschalteten Vorladebetriebsmodus die Spannungsquelle 32 für eine vorgegebene Vorladezeit mittels eines Strombegrenzungselements 54 überbrückt, um einen induktiv bedingten Einschaltstromstoß bei Inbetriebnahme des Motorgenerators 16 zu begrenzen sowie eine damit einhergehende Beschädigung der am ersten Netzwerkabschnitt 14 angeschlossenen elektrischen Fahrzeugkomponenten 22 zu verhindern. Bei dem Strombegrenzungselement 54 handelt es sich um einen mittels eines weiteren elektromagnetischen Relais 56 hinzuschaltbaren Leistungswiderstand 58 oder aber um einen (nicht gezeigten) NTC-Thermistor.

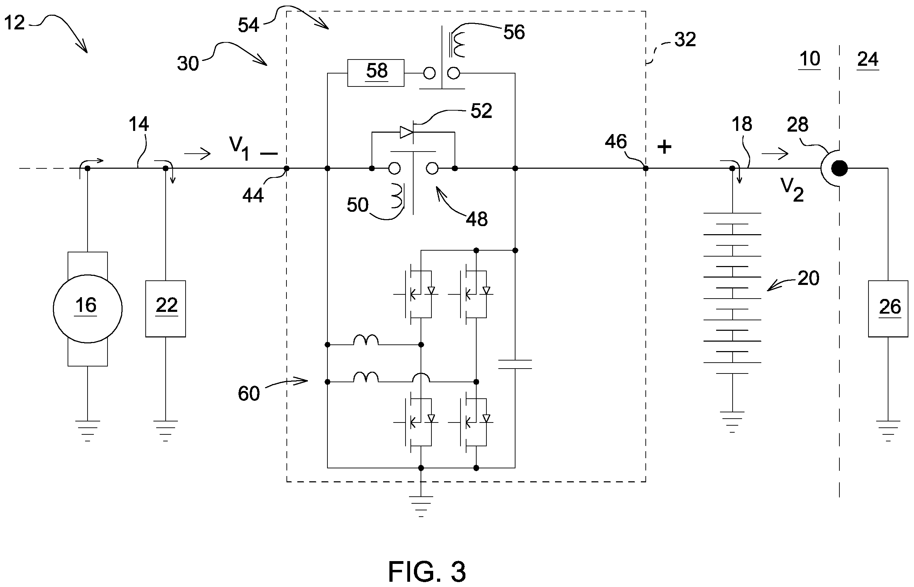

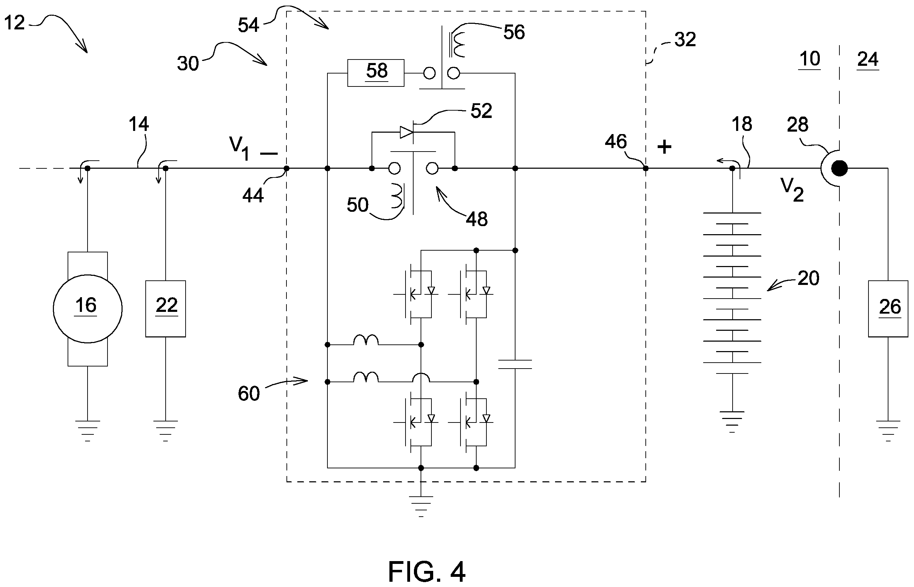

Fig. 3 und 4 zeigen eine weitere Stromversorgungsanordnung. Diese unterscheidet sich von dem zuvor beschriebenen Beispiel hinsichtlich der Ausgestaltung der Spannungsquelle 32.

Demgemäß handelt es sich bei der Spannungsquelle 32 um einen mit dem ersten und zweiten Netzwerkabschnitt 14, 18 in Serie geschalteten Aufwärtsregler 60 in Form eines DC/DC-Wandlers, der bei einer am ersten Netzwerkabschnitt 14 anliegenden Eingangsspannung von 48 Volt (entsprechend dem ersten Spannungsniveau V₁) am zweiten Netzwerkabschnitt 18 eine Ausgangsspannung von 56 Volt (entsprechend dem zweiten Spannungsniveau V₂) bereitstellt. Bezüglich der prinzipiellen Funktionsweise der Stromversorgungsanordnung 12 einschließlich der beiden Betriebsmodi sei auf das vorstehende Beispiel verwiesen.

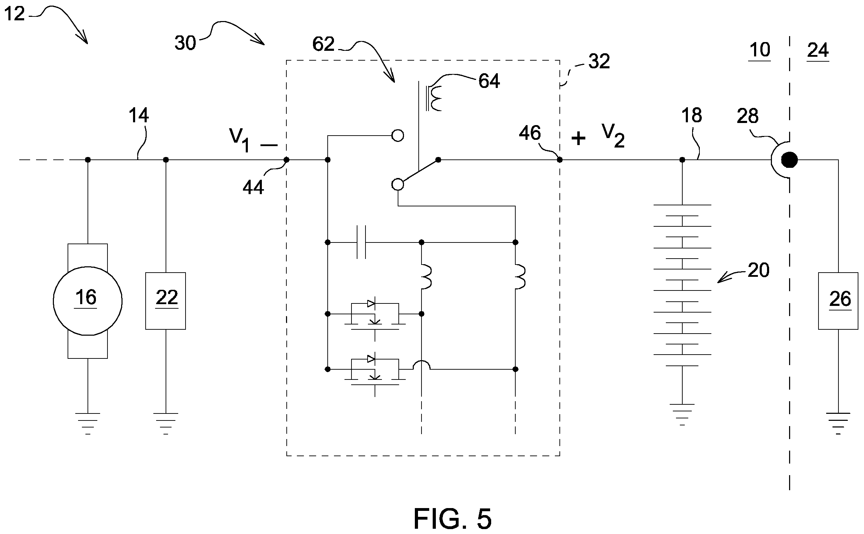

Fig. 5 zeigt eine erfindungsgemäß Ausgestaltung des Schaltelements zur Überbrückung der Spannungsquelle, wobei letztere als Spannungskonverter 36 oder Aufwärtsregler 60 ausgebildet sein kann. Demgemäß ist als Schaltelement 48 ein Wechselschalter 62 zur Umschaltung zwischen dem in Fig. 5 dargestellten Ladebetriebsmodus und dem Motorbetriebsmodus derart vorgesehen, dass der zweite Netzwerkabschnitt 18 im Ladebetriebsmodus mit der Spannungsquelle 32 und im Motorbetriebsmodus mit dem ersten Netzwerkabschnitt 14 verbunden ist. Der zweite Netzwerkabschnitt 18 ist dann vollständig von der Spannungsquelle 32 getrennt, sodass diese angeschaltet bleiben kann. Der Wechselschalter 62 ist in Gestalt eines elektromagnetischen Relais 64 baulich in die Spannungsquelle 32 integriert.

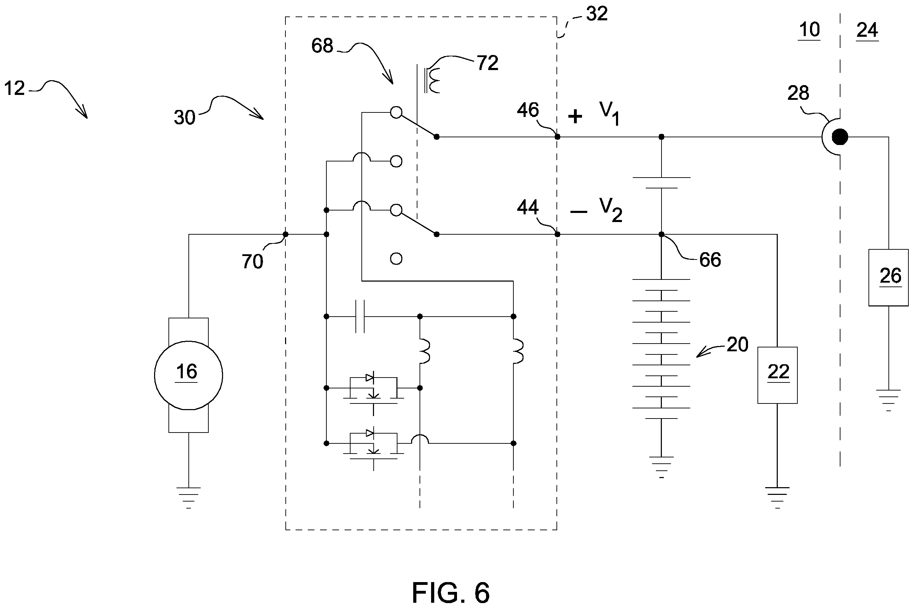

Fig. 6 zeigt eine Abwandlung der Stromversorgungsanordnung 12 gemäß Fig. 5, bei der der Bleiakkumulator 20 einen mit dem ersten Netzwerkabschnitt 14 verbundenen Mittenabgriff 66 aufweist, sodass sich der erste Netzwerkabschnitt 14 auf einem gegenüber der Nennspannung des Bleiakkumulators 20 niedrigeren ersten Spannungsniveau V₁ betreiben lässt. Der Mittenabgriff 66 befindet sich zwischen den einzelnen Zellen des Bleiakkumulators 20, von denen jede eine Nennspannung von 6 Volt aufweist. Für den dargestellten Fall eines Bleiakkumulators 20 mit einer Nennspannung von 48 Volt beträgt die Spannung am Mittenabgriff beispielhaft 42 Volt und wird zwischen der ersten und den übrigen sieben der in Serie geschalteten Zellen abgegriffen.

Hierbei ist zur Umschaltung zwischen dem in Fig. 6 dargestellten Ladebetriebsmodus und dem Motorbetriebsmodus ein Doppelwechselschalter 68 derart vorgesehen, dass im Ladebetriebsmodus der erste Netzwerkabschnitt 14 über eine Zwischenklemme 70 mit dem Motorgenerator 16 und der zweite Netzwerkabschnitt 18 mit der Spannungsquelle 32 verbunden ist, und dass im Motorbetriebsmodus der zweite Netzwerkabschnitt 18 anstelle des ersten Netzwerkabschnitts 14 mit dem Motorgenerator 16 verbunden ist. Während des Ladebetriebsmodus lädt die Spannungsquelle 32 somit die erste Zelle des Bleiakkumulators 20, der Motorgenerator 16 hingegen die übrigen sieben Zellen. Im Ladebetriebsmodus kann auch hier die Spannungsquelle 32 angeschaltet bleiben.

Der Doppelwechselschalter 68 ist in Gestalt eines elektromagnetischen Relais 72 baulich in die Spannungsquelle 32 integriert.

## Patentansprüche

1. Stromversorgungsanordnung zum Betreiben eines Mehrspannungssystems eines landwirtschaftlichen Fahrzeugs, umfassend einen ersten Netzwerkabschnitt (14) mit einem daran angeschlossenen Motorgenerator (16) und einen zweiten Netzwerkabschnitt (18) mit einem daran angeschlossenen Bleiakkumulator (20), wobei der erste Netzwerkabschnitt (14) ein der Nennspannung des Bleiakkumulators (20) entsprechendes erstes Spannungsniveau (V₁) zum Betreiben elektrischer Fahrzeugkomponenten (22) und der zweite Netzwerkabschnitt (18) ein davon abweichendes, demgegenüber erhöhtes zweites Spannungsniveau (V₂) zum Laden des Bleiakkumulators (20) sowie zur Versorgung einer von einem landwirtschaftlichen Anbaugerät (24) umfassten elektrischen Last (26) mit elektrischer Energie aufweist, wobei eine Schnittstelle (30) vorgesehen ist, die eine die beiden Netzwerkabschnitte (14, 18) verbindende Spannungsquelle (32) bildet, die in einem Ladebetriebsmodus, in dem der Motorgenerator (16) zur Erzeugung elektrischer Energie herangezogen wird, eine sich aus den beiden Spannungsniveaus (V₁, V₂) ergebende Ausgleichsspannung bereitstellt und die in einem Motorbetriebsmodus, in dem der Motorgenerator (16) zur Erzeugung eines Antriebsmoments mit der seitens des Bleiakkumulators (20) zur Verfügung stehenden elektrischen Energie unter Unterbrechung des Betriebs der elektrischen Last (26) beaufschlagt wird, überbrückt ist, wobei ein Wechselschalter (62) zur Umschaltung zwischen dem Ladebetriebsmodus und dem Motorbetriebsmodus derart vorgesehen ist, dass der zweite Netzwerkabschnitt (18) im Ladebetriebsmodus mit der Spannungsquelle (32) und im Motorbetriebsmodus unter Trennung von der Spannungsquelle (32) mit dem ersten Netzwerkabschnitt (14) verbunden ist.

2. Stromversorgungsanordnung nach Anspruch 1, **dadurch gekennzeichnet, dass** das erste Spannungsniveau (V₁) 48 Volt und das zweite Spannungsniveau (V₂) 56 Volt beträgt.

3. Stromversorgungsanordnung nach Anspruch 1 oder 2, **dadurch gekennzeichnet, dass** der Motorgenerator (16) als Startergenerator zum Anlassen eines mit diesem antriebsverbundenen Verbrennungsmotors ausgebildet ist.

4. Stromversorgungsanordnung nach wenigstens einem der Ansprüche 1 bis 3, **dadurch gekennzeichnet, dass** es sich bei der Spannungsquelle (32) um einen aus einer Fremdspannungsquelle (34) gespeisten potentialfreien Spannungskonverter (36) handelt.

5. Stromversorgungsanordnung nach wenigstens einem der Ansprüche 1 bis 3, **dadurch gekennzeichnet, dass** es sich bei der Spannungsquelle (32) um einen mit dem ersten und zweiten Netzwerkabschnitt (14, 18) in Serie geschalteten Aufwärtsregler (60) handelt.

6. Stromversorgungsanordnung nach wenigstens einem der Ansprüche 1 bis 5, **dadurch gekennzeichnet, dass** die Überbrückung der Spannungsquelle (32) mittels eines elektromagnetischen Relais oder eines Halbleiterschalters erfolgt.

7. Stromversorgungsanordnung nach wenigstens einem der Ansprüche 1 bis 6, **dadurch gekennzeichnet, dass** in einem dem Motorbetriebsmodus vorgeschalteten Vorladebetriebsmodus die Spannungsquelle (32) für eine vorgegebene Vorladezeit mittels eines Strombegrenzungselements überbrückt ist.

8. Stromversorgungsanordnung nach wenigstens einem der Ansprüche 1 bis 7, **dadurch gekennzeichnet, dass** der Bleiakkumulator (20) einen mit dem ersten Netzwerkabschnitt (14) verbundenen Mittenabgriff (66) aufweist, der sich zwischen den einzelnen Zellen des Bleiakkumulators (20) befindet.

9. Stromversorgungsanordnung nach Anspruch 8, **dadurch gekennzeichnet, dass** ein Doppelwechselschalter (68) zur Umschaltung zwischen dem Ladebetriebsmodus und dem Motorbetriebsmodus derart vorgesehen ist, dass im Ladebetriebsmodus der erste Netzwerkabschnitt (14) mit dem Motorgenerator (16) und der zweite Netzwerkabschnitt (18) mit der Spannungsquelle (32) verbunden ist, und dass im Motorbetriebsmodus der zweite Netzwerkabschnitt (18) anstelle des ersten Netzwerkabschnitts mit dem Motorgenerator (16) verbunden ist.

10. Landwirtschaftliches Fahrzeug, insbesondere landwirtschaftlicher Traktor, mit einer Stromversorgungsanordnung (12) nach wenigstens einem der Ansprüche 1 bis 9.

## Claims

1. Power supply arrangement for operating a multivoltage system of an agricultural vehicle, comprising a first network section (14) with a motor generator (16) connected thereto and a second network section (18) with a lead battery (20) connected thereto, wherein the first network section (14) has a first voltage level (V₁), corresponding to the nominal voltage of the lead battery (20), for operating electrical vehicle components (22) and the second network section (18) has a second voltage level (V₂), different from and higher than said first voltage level, for charging the lead battery (20) and for supplying an electrical load (26), consisting of an agricultural auxiliary device (24), with electrical energy, wherein an interface (30) is provided and forms a voltage source (32) that connects the two network sections (14, 18) and that provides a compensation voltage resulting from the two voltage levels (V₁, V₂) in a charging operating mode in which the motor generator (16) is used to generate electrical energy, and that is bypassed in a motor operating mode in which the motor generator (16) is supplied with the electrical energy available from the lead battery (20) in order to generate a drive torque with operation of the electrical load (26) being interrupted, wherein a changeover switch (62) for switching between the charging operating mode and the motor operating mode is provided such that the second network section (18) is connected to the voltage source (32) in the charging operating mode and is connected to the first network section (14) with the voltage source (32) disconnected in the motor operating mode.

2. Power supply arrangement according to Claim 1, **characterized in that** the first voltage level (V₁) is 48 volts and the second voltage level (V₂) is 56 volts.

3. Power supply arrangement according to Claim 1 or 2, **characterized in that** the motor generator (16) is designed as a starter generator for starting a combustion engine connected thereto in terms of drive.

4. Power supply arrangement according to at least one of Claims 1 to 3, **characterized in that** the voltage source (32) is a floating voltage converter (36) supplied from an external voltage source (34).

5. Power supply arrangement according to at least one of Claims 1 to 3, **characterized in that** the voltage source (32) is a boost controller (60) connected in series with the first and second network section (14, 18).

6. Power supply arrangement according to at least one of Claims 1 to 5, **characterized in that** the voltage source (32) is bypassed by way of an electromagnetic relay or a semiconductor switch.

7. Power supply arrangement according to at least one of Claims 1 to 6, **characterized in that** the voltage source (32) is bypassed by way of a power limiter element for a predefined pre-charging time in a pre-charging mode before the motor operating mode.

8. Power supply arrangement according to at least one of Claims 1 to 7, **characterized in that** the lead battery (20) has a centre tap (66) connected to the first network section (14) and located between the individual cells of the lead battery (20).

9. Power supply arrangement according to Claim 8, **characterized in that** a dual changeover switch (68) is provided for switching between the charging operating mode and the motor operating mode such that, in the charging operating mode, the first network section (14) is connected to the motor generator (16) and the second network section (18) is connected to the voltage source (32) and that, in the motor operating mode, the second network section (18) is connected to the motor generator (16) instead of the first network section.

10. Agricultural vehicle, in particular agricultural tractor, having a power supply arrangement (12) according to at least one of Claims 1 to 9.

## Revendications

1. Arrangement d'alimentation électrique destiné à faire fonctionner un système à tensions multiples d'un véhicule agricole, comprenant une première portion de réseau (14) à laquelle est raccordé un motogénérateur (16) et une deuxième portion de réseau (18) à laquelle est raccordé un accumulateur au plomb (20), la première portion de réseau (14) présentant un premier niveau de tension (V₁) qui correspond à la tension nominale de l'accumulateur au plomb (20) et destiné à faire fonctionner des composants de véhicule (22) électriques, et la deuxième portion de réseau (18) présentant un deuxième niveau de tension (V₂) différent de celui-ci, accru par rapport à celui-ci, destiné à charger l'accumulateur au plomb (20) ainsi qu'à alimenter en énergie électrique une charge électrique (26) comprise par un outil porté (24) agricole, une interface (30) étant présente, laquelle forme une source de tension (32) qui relie les deux portions de réseau (14, 18), laquelle fournit, dans un mode de fonctionnement de charge dans lequel le motogénérateur (16) est utilisé pour générer de l'énergie électrique, une tension d'équilibrage qui résulte des deux niveaux de tension (V₁, V₂) et laquelle, dans un mode de fonctionnement en moteur dans lequel le motogénérateur (16), en vue de générer un couple d'entraînement, est chargé avec l'énergie électrique disponible au niveau de l'accumulateur au plomb (20) en interrompant le fonctionnement de la charge électrique (26), est court-circuitée, un inverseur (62) destiné à permuter entre le mode de fonctionnement de charge et le mode de fonctionnement en moteur étant présent de telle sorte que la deuxième portion de réseau (18), en mode de fonctionnement de charge, est reliée à la source de tension (32) et, en mode de fonctionnement en moteur, est reliée à la première portion de réseau (14) avec séparation de la source de tension (32).

2. Arrangement d'alimentation électrique selon la revendication 1, **caractérisé en ce que** le premier niveau de tension (V₁) est de 48 volts et le deuxième niveau de tension (V₂) est de 56 volts.

3. Arrangement d'alimentation électrique selon la revendication 1 ou 2, **caractérisé en ce que** le motogénérateur (16) est réalisé sous la forme d'un générateur démarreur destiné à lancer un moteur à combustion interne relié en motricité à celui-ci.

4. Arrangement d'alimentation électrique selon au moins l'une des revendications 1 à 3, **caractérisé en ce que** la source de tension (32) est un convertisseur de tension (36) exempt de potentiel alimenté à partir d'une source de tension externe (34).

5. Arrangement d'alimentation électrique selon au moins l'une des revendications 1 à 3, **caractérisé en ce que** la source de tension (32) est un régulateur élévateur (60) branché en série avec la première et la deuxième portion de réseau (14, 18).

6. Arrangement d'alimentation électrique selon au moins l'une des revendications 1 à 5, **caractérisé en ce que** le court-circuitage de la source de tension (32) est effectué au moyen d'un relais électromagnétique ou d'un commutateur semiconducteur.

7. Arrangement d'alimentation électrique selon au moins l'une des revendications 1 à 6, **caractérisé en ce que** dans un mode de fonctionnement de précharge, qui précède le mode de fonctionnement en moteur, la source de tension (32) est court-circuitée au moyen d'un élément limiteur de courant pendant un temps de précharge prédéfini.

8. Arrangement d'alimentation électrique selon au moins l'une des revendications 1 à 7, **caractérisé en ce que** l'accumulateur au plomb (20) possède une prise centrale (66) reliée à la première portion de réseau (14), laquelle se trouve entre les cellules individuelles de l'accumulateur au plomb (20).

9. Arrangement d'alimentation électrique selon la revendication 8, **caractérisé en ce qu'**un double inverseur (68) destiné à permuter entre le mode de fonctionnement de charge et le mode de fonctionnement en moteur est présent de telle sorte que dans le mode de fonctionnement de charge, la première portion de réseau (14) est reliée au motogénérateur (16) et la deuxième portion de réseau est reliée (18) à la source de tension (32), et que dans le mode de fonctionnement en moteur, la deuxième portion de réseau (18) est reliée au motogénérateur (16) à la place de la première portion de réseau.

10. Véhicule agricole, notamment tracteur agricole, comprenant un arrangement d'alimentation électrique (12) selon au moins l'une des revendications 1 à 9.
